# EUROPEAN PATENT APPLICATION

(11) **EP 4 531 147 A1**
(43) Date of publication of application: **02.04.2025**
(21) Application number: 24200149.3
(22) Date of filing: 13.09.2024
(51) Int. Cl.: H01M 8/04119, H01M 8/0444, H01M 8/04664, H01M 8/10, H01M 8/04828, H01M 8/04492

(54) **SYSTEMS AND METHODS OF FUEL CELL HUMIDIFIER LEAK DETECTION**

(30) Priority: 26.09.2023 US 202363585426 P
(71) Applicant: Cummins, Inc., Columbus, IN 47202 (US)
(72) Inventor: ERNST, Timothy C., Columbus, 47203 (US); ZIGAN, James A., Versailles, 47042 (US)
(74) Representative: Marks & Clerk Cummins

(57) **Abstract**

A fuel cell system (210) includes a fuel cell stack (212), a humidifier (230) including a wet-side (234) fluidically coupled downstream of the fuel cell stack (212) and a dry-side (236) fluidically coupled upstream of the fuel cell stack (212), and a first oxygen sensor (266). The humidifier (230) is configured to humidify a dry air stream (342) to form a partially humidified air stream (344) that exits the dry-side of the humidifier (236) and enters the fuel cell stack (212). The first oxygen sensor (266) is arranged downstream of the wet-side of the humidifier (234) and is configured to measure a first oxygen concentration of an exhaust air stream (244) exiting the wet-side of the humidifier (234) to determine a presence of a leak in the humidifier (230).

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/585,426 filed on September 26, 2023, the entire disclosure of which is hereby expressly incorporated herein by reference.

### TECHNICAL FIELD

The present disclosure relates to systems and methods of detecting, identifying, and/or sensing a fuel cell humidifier leak.

### BACKGROUND

Vehicles and/or powertrains use fuel cells or fuel cell stacks in fuel cell engines or fuel cell systems for their power needs. A fuel cell or a fuel cell stack in the fuel cell engine or the fuel cell system may generate electricity in the form of direct current (DC) from electrochemical reactions that take place in a cathode and an anode of the fuel cell or the fuel cell stack. The fuel cell engine may be powered by hydrogen or a hydrogen-rich, conventional fuel, such as methanol, gasoline, diesel, or gasified coal. The fuel cell and the fuel cell stack convert the hydrogen fuel into a form usable by the fuel cell or the fuel cell stack.

Humidity in a cathode air stream enables increased fuel cell stack performance and/or longevity of the fuel cell stack. Humidifiers may be utilized in a fuel cell stack or a fuel cell system to transfer water vapor in a fuel cell exhaust to the cathode air stream. The humidifier may leak air from an intake air to an exhaust air because the intake air may be at a higher pressure. Air leakage may also be due to degradation or cracks in a membrane of the humidifier or leakage at a membrane header joint.

A leaking fuel cell humidifier reduces its ability to humidify the cathode air stream. Humidifier leakage may also result in air flow loss to the cathode, thereby lowering overall fuel cell stack performance. Currently, measuring and comparing pressure at an outlet of a wet-side of the humidifier and/or at an outlet of a compressor is a common method used to detect a leak in humidifiers. It may be desirable to measure other variables or parameters of the fuel cell system to detect a fuel cell humidifier leak.

The present disclosure provides systems and methods of detecting, identifying, and/or sensing a fuel cell humidifier leak.

### SUMMARY

Embodiments of the present disclosure are included to meet these and other needs.

In one aspect, described herein, a fuel cell system includes a fuel cell stack, a humidifier, and a first oxygen sensor. The fuel cell stack includes a stack inlet and a stack outlet opposite the stack inlet. The humidifier includes a wet-side fluidically coupled downstream of the stack outlet and a dry-side fluidically coupled upstream of the stack inlet. The humidifier is configured to humidify a dry air stream to form a partially humidified air stream that exits an outlet of the dry-side of the humidifier and enters the stack inlet of the fuel cell stack. The first oxygen sensor is arranged downstream of an outlet of the wet-side of the humidifier and is configured to measure a first oxygen concentration of an exhaust air stream exiting the outlet of the wet-side of the humidifier. The first oxygen concentration of the exhaust air stream being greater than a threshold is indicative of a leak within the humidifier.

In some embodiments, the threshold may be about 15%. In some embodiments, the threshold may be about 13% to about 15%. In some embodiments, the fuel cell system may further comprise a second oxygen sensor arranged downstream of the stack outlet of the fuel cell stack and upstream of an inlet of the wet-side of the humidifier. In some embodiments, the second oxygen sensor may be configured to measure a second oxygen concentration of a humidified air stream exiting the stack outlet of the fuel cell stack.

In some embodiments, the threshold may be the same as the second oxygen concentration. In some embodiments, the threshold may be the second oxygen concentration plus two percent. In some embodiments, the fuel cell system may further comprise a humidity sensor arranged downstream of the outlet of the wet-side of the humidifier and upstream of the first oxygen sensor. In some embodiments, the humidity sensor may be configured to measure a humidity of the exhaust air stream exiting the outlet of the wet-side of the humidifier.

In some embodiments, a pressure sensor may not be located downstream of the wet-side of the humidifier. In some embodiments, the threshold may be determined based on historical use data of the fuel cell stack. In some embodiments, the fuel cell system may further comprise a pressure sensor located upstream of an inlet of the dry-side of the humidifier.

According to a second aspect, described herein, a method of detecting a leak in a humidifier of a fuel cell system comprises flowing a dry air stream through a compressor and into an inlet of a dry-side of the humidifier. The method comprises flowing a partially humidified air stream out of an outlet of the dry-side of the humidifier and into a stack inlet of a fuel cell stack. The method comprises flowing a humidified air stream out of a stack outlet of the fuel cell stack and into an inlet of a wet-side of the humidifier. The method comprises flowing an exhaust air stream out of an outlet of the wet-side of the humidifier. The method comprises measuring a first oxygen concentration of the exhaust air stream downstream of the outlet of the wet-side of the humidifier using a first oxygen sensor. The method comprises determining a presence or an absence of the leak in the humidifier based on the first oxygen concentration of the exhaust air stream.

In some embodiments, the method may further comprise comparing the first oxygen concentration to a threshold to determine the presence or the absence of the leak in the humidifier. In some embodiments, the method may further comprise, in response to the first oxygen concentration being greater than the threshold, determining the presence of the leak in the humidifier. In some embodiments, the threshold may be about 15%.

In some embodiments, the method may further comprise calculating the threshold using historical use data of the fuel cell stack. In some embodiments, the method may further comprise measuring a second oxygen concentration of the humidified air stream downstream of the stack outlet of the fuel cell stack using a second oxygen sensor. In some embodiments, the method may further comprise setting the threshold to be the same as the second oxygen concentration.

In some embodiments, the method may further comprise setting the threshold to be the second oxygen concentration plus two percent. In some embodiments, the method may further comprise maintaining a position of the humidifier within the fuel cell system while determining the presence or the absence of the leak in the humidifier. In some embodiments, the method may further comprise measuring a humidity of the exhaust air stream using a humidity sensor.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. ID is a cross-sectional view of an exemplary repeating unit of the fuel cell stack of FIG. 1C;
FIG. 2 is an illustration of one embodiment of a fuel cell system including a fuel cell stack, a humidifier, a humidity sensor, and a plurality of oxygen sensors; and
FIG. 3 is an illustration of another embodiment of a fuel cell system including a fuel cell stack, a humidifier, a plurality of humidity sensors, and a plurality of oxygen sensors.

### DETAILED DESCRIPTION

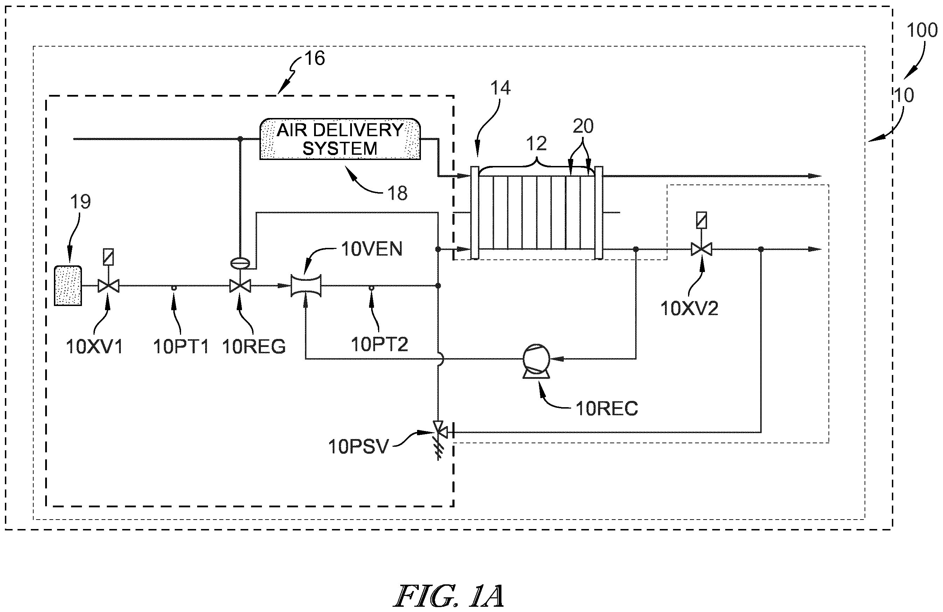

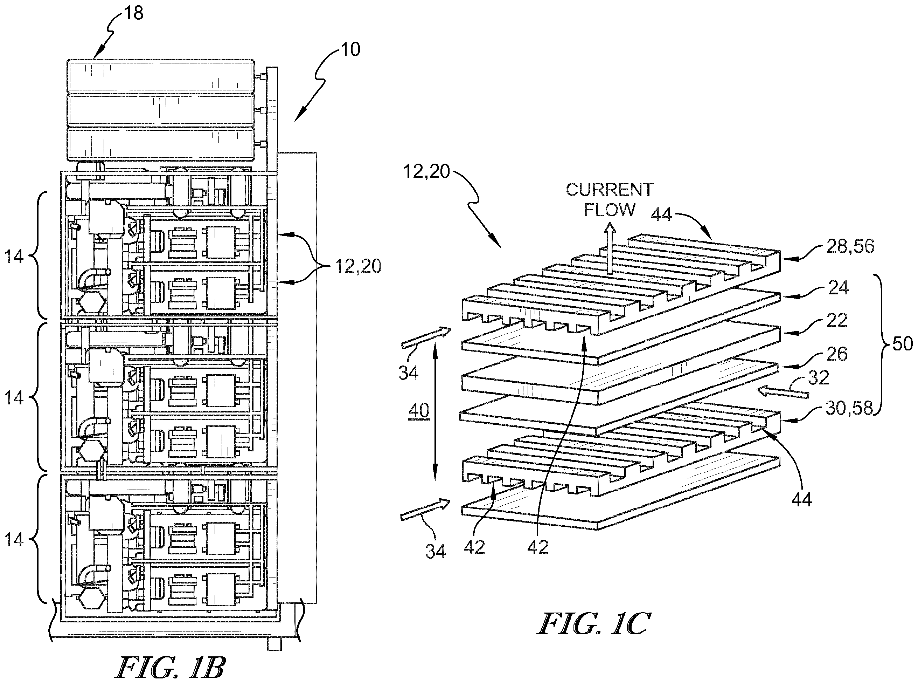

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and a gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layers (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling fluid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

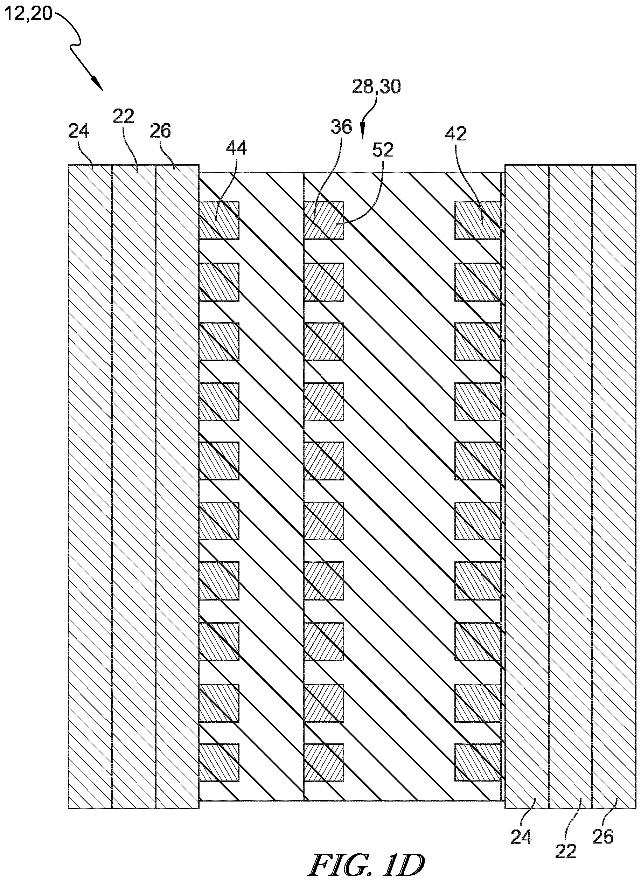

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the bipolar plate (BPP) 28, 30. The coolant flow fields 52 facilitate the flow of cooling fluid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein, may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19. The pressure transducer 10PT1 may be arranged between the on/off valve 10XV1 and the mechanical regulator 10REG, as shown in FIG. 1A. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG, as shown in FIG. 1A.

In some embodiments, the fuel cell system 10 may further include a recirculation pump 10REC downstream of the stack 12 and operably connected to the venturi 10VEN, as shown in FIG. 1A. The fuel cell system 10 may also include a further on/off valve 10XV2 downstream of the stack 12 and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

In addition, it may be appreciated by a person of ordinary skill in the art that the fuel cell system 10, fuel cell stack 12, and/or fuel cell 20 described in the present disclosure may be substituted for any electrochemical system, such as an electrolysis system (e.g., an electrolyzer), an electrolyzer stack, and/or an electrolyzer cell (EC), respectively. As such, in some embodiments, the features and aspects described and taught in the present disclosure regarding the fuel cell system 10, stack 12, or cell 20 also relate to an electrolyzer, an electrolyzer stack, and/or an electrolyzer cell (EC). For example, in some embodiments, the features and attributes described herein as related to the fuel cell bipolar plates (BPP) 28, 30 may also relate to and/or be incorporated by one or more electrolyzer plates 56, 58. In further embodiments, the features and aspects described or taught in the present disclosure do not relate, and are therefore distinguishable from, those of an electrolyzer, an electrolyzer stack, and/or an electrolyzer cell (EC).

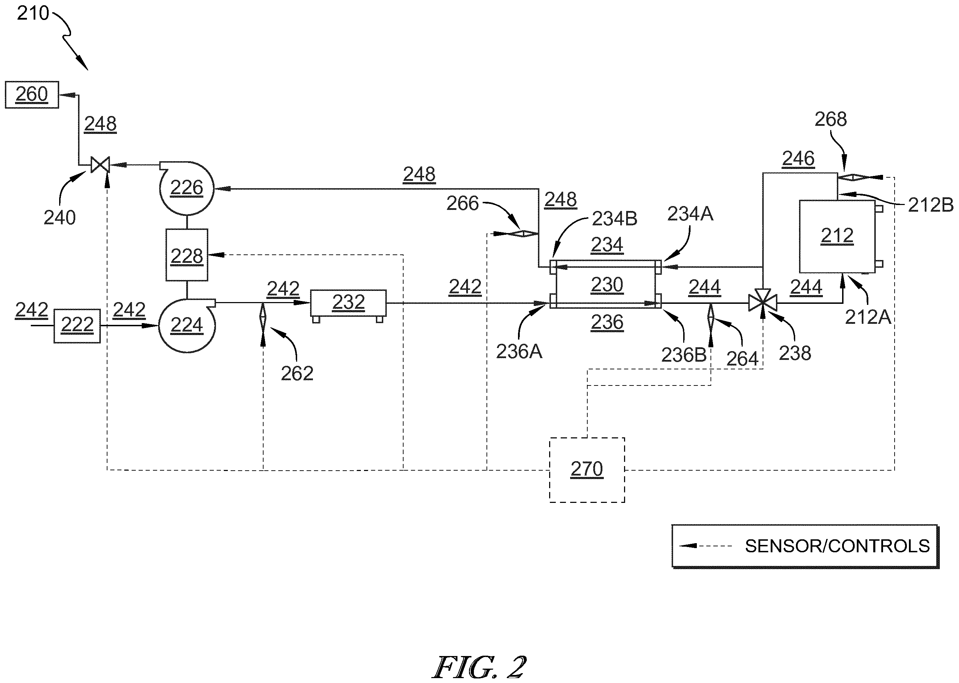

The present disclosure provides systems and methods of detecting, identifying, and/or sensing a fuel cell humidifier leak. FIG. 2 illustrates another embodiment of a fuel cell system 210. The fuel cell system 210 includes an air filter 222, a compressor 224, a turbine 226, a motor 228, a humidifier 230, and/or a charge air cooler (CAC) 232. The air filter 222 is arranged upstream of the compressor 224 to deliver a dry air stream 242 to the compressor 224. The motor 228 is coupled with the compressor 224 and the turbine 226 to selectively and/or individually drive the compressor 224 and the turbine 226. In some embodiments, the CAC 232 is arranged in series with a fuel cell stack 212 included in the fuel cell system 210. The humidifier 230 is arranged downstream of the CAC 232 to locate the CAC 232 between the compressor 224 and the humidifier 230.

In some embodiments, the fuel cell system 210 further includes one or more valves. For example, the fuel cell system 210 includes a bypass valve 238 and/or a two-way backpressure valve 240, as shown in FIG. 2. In some embodiments, the bypass valve 238 is a three-way stack isolation valve 238. In other embodiments, the fuel cell system 210 includes multiple valves, sensors, compressors, regulators, blowers, injectors, ejectors, and/or other devices in series or in parallel with the fuel cell stack 212. In some embodiments, an ultrasonic sensor arranged downstream of a wet-side 234 of the humidifier 230 may be used to detect, measure, and/or identify leaks.

The humidifier 230 has a wet-side 234 and a dry-side 236, as shown in FIG. 2. The dry-side 236 includes an inlet 236A and an outlet 236B opposite the inlet 236A. The wet-side 234 includes an inlet 234A and an outlet 234B opposite the inlet 234A.

The dry air stream 242, also referred to as a cathode air stream 242, flows through the air filter 222, through the compressor 224, through the CAC 232, and into the inlet 236A of the dry-side 236 of the humidifier 230, as shown in FIG. 2. The dry air stream 242 is humidified as it passes through the dry-side 236 of the humidifier 230 to produce a partially humidified air stream 244. The partially humidified air stream 244 exits the humidifier 230 through the outlet 236B of the dry-side 236 and enters the fuel cell stack 212 after passing through the bypass valve 238, as shown in FIG. 2. More specifically, the partially humidified air stream 244 enters a stack inlet 212A of the fuel cell stack 212.

A humidified air stream 246 exits the fuel cell stack 212 through a stack outlet 212B and flows into the inlet 234A of the wet-side 234 of the humidifier 230, as shown in FIG. 2. The humidified air stream 246 flows out of the wet-side 234 of the humidifier 230 through the outlet 234B as an exhaust air stream 248. The exhaust air stream 248 flows through the backpressure transfer valve 240 into exhaust plumbing 260. Such a configuration, design, and/or implementation, as shown in FIG. 2, results, in some embodiments, in the humidification of the entire volume of the partially humidified air stream 244 entering the fuel cell stack 212.

In some embodiments, the bypass valve 238 is located between the outlet 236B of the dry-side 236 of the humidifier and the stack inlet 212A of the fuel cell stack 212, as shown in FIG. 2. In some embodiments, the two-way backpressure valve 240 is located between the turbine 226 and the exhaust plumbing 260.

Humidifiers, such as the humidifier 230, are prone to developing leaks over time. Leaks in the humidifier 230 may allow compressed air to bypass the fuel cell stack 212 so that the fuel cell system 210 runs at a lower air-to-fuel ratio than desired. For example, normal and/or desired stoichiometric air-to-fuel ratio for hydrogen for proper fuel cell system operation ranges from about 32:1 to about 37:1, including any ratio comprised therein. Assessment, measurement, and/or detection of a humidifier leak may comprise an air-to-fuel ratio that is outside the noted range for proper fuel cell system operation.

Humidifier leaks may be due to natural degradation over the course of life, function, and/or operation of fuel cell systems. Leaks developed within humidifiers can result in poor, reduced, and/or suboptimal performance and/or operation of fuel cell systems. By way of example, some humidifiers, such as a shell and tube style humidifier known in the art, may leak due to tube to header cracks. Other humidifiers, such as stacked flat-plate style humidifiers known in the art, may leak due to plate to header cracks. Typical humidifiers known in the art may also develop leaks within a membrane material that forms tubes or flat sheets included in the humidifier.

As shown in FIG. 2, the fuel cell system 210 includes one or more sensors. In some embodiments, the sensors of the fuel cell system 210 include a pressure sensor 262, a humidity sensor 264, and/or at least one oxygen sensor 266, 268. In some embodiments, the fuel cell system 210 includes more than one sensor of a single type, such as a first oxygen sensor 266 and a second oxygen sensor 268.

In one embodiment, the pressure sensor 262 is located downstream of the compressor 224 and upstream of the CAC 232, as shown in FIG. 2. For example, the fuel cell system 210 includes the pressure sensor 262 arranged upstream of the CAC 232 and upstream of the inlet 236A of the dry-side 236 of the humidifier 230 (see FIG. 2). In the illustrative embodiment, the fuel cell system 210 does not include a pressure sensor downstream of the wet-side 234 of the humidifier 230, as shown in FIG. 2. However, in another embodiment, a pressure sensor could be located downstream of the wet-side 234 of the humidifier 230.

In other embodiments, the pressure sensor 262 is located elsewhere within the fuel cell system 210. In some embodiments, the pressure sensor 262 is omitted altogether. In other embodiments, the fuel cell system 210 includes additional pressure sensors. For example, the fuel cell system 210 may comprise a range of about one (1) to about ten (10) pressure sensors, including any number comprised therein. For example, the pressure sensor 262, as shown in FIG. 2, is arranged downstream of the compressor 224 and an additional pressure sensor, not shown, is arranged downstream of the outlet 234B of the wet-side 234 of the humidifier 230. A comparison of pressures detected by these two pressure sensors indicates whether there is a leak within the humidifier 230. For example, a higher pressure at the outlet 234B of the wet-side 234 of humidifier 230 than the pressure at the compressor 224 is indicative of a leak.

In one embodiment, the humidity sensor 264 is located downstream of the outlet 236B of the dry-side 236 of the humidifier 230 and upstream of the bypass valve 238, as shown in FIG. 2. For example, the fuel cell system 210 includes the humidity sensor 264 arranged downstream of the outlet 236B of the dry-side 236 of the humidifier 230 and upstream of the stack inlet 212A of the fuel cell stack 212 (see FIG. 2). The humidity sensor 264 measures a humidity of the partially humidified air stream 244 exiting the outlet 236B of the dry-side 236 of the humidifier 230.

In other embodiments, the humidity sensor 264 is located elsewhere within the fuel cell system 210. In some embodiments, the humidity sensor 264 is omitted altogether. In other embodiments, the fuel cell system 210 includes additional humidity sensors. For example, the fuel cell system 210 may comprise a range of about one (1) to about ten (10) humidity sensors, including any number comprised therein.

In an exemplary embodiment, the fuel cell system 210 includes at least two oxygen sensors, the first oxygen sensor 266 and the second oxygen sensor 268. In some embodiments, the first oxygen sensor 266 is located downstream of the outlet 234B of the wet-side 234 of the humidifier 230, as shown in FIG. 2. In other embodiments, the first oxygen sensor 266 is located elsewhere within the fuel cell system 210. In other embodiments, the first oxygen sensor 266 is omitted altogether.

In some embodiments, the second oxygen sensor 268 is located downstream of the stack outlet 212B of the fuel cell stack 212 and upstream of the inlet 234A of the wet-side 234 of the humidifier 230, as shown in FIG. 2. In other embodiments, the second oxygen sensor 268 is located elsewhere within the fuel cell system 210. In some embodiments, the second oxygen sensor 268 is omitted altogether.

In some embodiments, the fuel cell system 210 includes additional oxygen sensors beyond the first and second oxygen sensors 266, 268. For example, the fuel cell system 210 may comprise a range of about one (1) to about ten (10) oxygen sensors, including any number comprised therein.

In one embodiment, the first oxygen sensor 266 and the second oxygen sensor 268 are both arranged downstream of the stack outlet 212B of the fuel cell stack 212, as shown in FIG. 2. In one embodiment of the present fuel cell system 210, the first oxygen sensor 266 measures a first oxygen concentration of the exhaust air stream 248 exiting the outlet 234B of the wet-side 234 of the humidifier 230, as shown in FIG. 2. The second oxygen sensor 268 measures a second oxygen concentration of the humidified air stream 246 exiting the stack outlet 212B of the fuel cell stack 212.

Generally, in a typical fuel cell system 210, an oxygen concentration of air (i.e., the first oxygen concentration of the exhaust air stream 248) exiting the outlet 234B of the wet-side 234 of the humidifier 230 may range from about 10% to about 15%, including any range of percentages or specific percentages comprised therein. For example, the first oxygen concentration of the exhaust air stream 248 may be about 10% to about 14%, about 10% to about 13%, about 10% to about 12%, about 10% to about 11%, about 11% to about 14%, about 12% to about 14%, about 13% to about 14%, about 10%, about 12%, about 13%, or about 14%. In some embodiments the first oxygen concentration of the exhaust air stream 248 may be about 11%. Notably, the first oxygen concentration may vary depending on the fuel cell stack 212.

When the first oxygen concentration of the exhaust air stream 248 is greater than a threshold, a presence of a leak within the humidifier 230 is indicated and/or detected. In some embodiments, the threshold ranges from about 10% to about 15%, including any range of percentages or specific percentages comprised therein. In some embodiments, the threshold ranges from about 12% to about 15% or about 13% to about 15%, including any range of percentages or specific percentages comprised therein. In some embodiments, the threshold is about 13%, about 14%, or about 15%.

In some embodiments, the threshold is determined, defined, and/or established based on historical use data of the fuel cell stack 212. The historical use data may be used to determine the expected oxygen concentration at the outlet 234B of the wet-side 234 of the humidifier 230, which may correspond to the threshold. For example, based on the historical use data of the fuel cell stack 212, it may be expected that the oxygen concentration at the outlet 234B of the wet-side 234 of the humidifier 230, as detected by the first oxygen sensor 266, should measure from about 10% to about 11%, including any range of percentages or specific percentages comprised therein. The threshold may then be set to about 10% to about 11%.

The first oxygen concentration is measured by the first oxygen sensor 266 and compared to the threshold. When the humidifier 230 is not leaking, the first oxygen concentration may be substantially similar to the threshold, such as within a range of about 5% of the threshold. For example, in some embodiments, the threshold may be the expected oxygen concentration plus a numerical value. Adding a numerical value to the expected oxygen concentration to set the threshold allows for minor deviations of the first oxygen concentration, such as, for example, due to sensor 266 error, without resulting in a false positive. In other words, without returning an inaccurate result that a leak is present when a leak is not present. For example, when the expected oxygen concentration is 11%, the threshold may be 12% (the expected oxygen concentration percentage plus 1%), 13% (the expected oxygen concentration plus 2%), 14% (the expected oxygen concentration plus 3%), etc., to allow for deviation of the first oxygen concentration as measured by the first oxygen sensor 266 without resulting in a false positive. When the humidifier 230 is leaking, the first oxygen concentration may be substantially greater than the threshold, such as greater than the threshold by about 5% (e.g., 16% oxygen concentration if the threshold is 11%). In other embodiments, when the humidifier 230 is leaking, the first oxygen concentration may be substantially greater than the threshold, such as greater than the threshold by about 4%, by about 3%, by about 2%, or by about 1%.

In some embodiments, the first oxygen sensor 266 is used to determine, identify, and/or detect a presence or an absence of the leak such that the second oxygen sensor 268 is omitted and/or not used in the detection of the leak. In some embodiments, the second oxygen sensor 268 is used in conjunction with the first oxygen sensor 266 to determine, identify, and/or detect the presence or the absence of the leak. The second oxygen sensor 268 measures the second oxygen concentration of the humidified air stream 246 exiting the stack outlet 212B, as shown in FIG. 2.

In an embodiment including the second oxygen sensor 268, the second oxygen concentration and the first oxygen concentration are compared to one another. For example, when the second oxygen concentration and the first oxygen concentration are the same or substantially similar to one another (e.g., within about 5% of one another, within about 4% of one another, within about 3% of one another, within about 2% of one another, or within about 1% of one another), the absence of the leak (e.g., no leak) is detected. A relatively large difference (e.g., greater than about 5%, greater than about 4%, greater than about 3%, greater than about 2%, or greater than about 1 %) between the second oxygen concentration and the first oxygen concentration indicates the presence of the leak. In an ideal fuel cell system 210, the first oxygen concentration and the second oxygen concentration should be substantially similar (e.g., within about 5% of one another, within about 4% of one another, within about 3% of one another, within about 2% of one another, or within about 1% of one another). Otherwise, there may be a leak in the humidifier 230 that causes the first oxygen concentration to be higher or greater than the second oxygen concentration (e.g., greater than about 5%, greater than about 4%, greater than about 3%, greater than about 2%, or greater than about 1%).

For example, when the difference between the second oxygen concentration and the first oxygen concentration is greater than 5%, then the presence of the leak is detected. In some embodiments, when the difference between the second oxygen concentration and the first oxygen concentration is greater than 4%, then the presence of the leak is detected. In some embodiments, when the difference between the second oxygen concentration and the first oxygen concentration is greater than 3%, then the presence of the leak is detected. In some embodiments, when the difference between the second oxygen concentration and the first oxygen concentration is greater than 2%, then the presence of the leak is detected. In some embodiments, when the difference between the second oxygen concentration and the first oxygen concentration is greater than about 2% to about 5%, then the presence of the leak is detected, including any range of percentages or specific percentages comprised therein.

In some embodiments, the difference between the second oxygen concentration and the first oxygen concentration ranging from about 0% to about 2% is indicative of the absence of the leak within the humidifier 230, including any range of percentages or specific percentages comprised therein. In some embodiments, the difference between the second oxygen concentration and the first oxygen concentration ranging from about 0% to about 3% is indicative of the absence of the leak within the humidifier 230, including any range of percentages or specific percentages comprised therein. In some embodiments, the difference between the second oxygen concentration and the first oxygen concentration ranging from about 0% to about 4% is indicative of the absence of the leak within the humidifier 230, including any range of percentages or specific percentages comprised therein.

In some embodiments, the second oxygen concentration may be used to determine the threshold. For example, the threshold may be equal to the second oxygen concentration. In such an embodiment, when the first oxygen concentration is greater than the threshold (i.e., the second oxygen concentration), the presence of the leak is detected. In some embodiments, the threshold may be the second oxygen concentration plus a numerical value. For example, when the second oxygen concentration is 11%, the threshold may be 12% (the second oxygen concentration plus 1%), 13% (the second oxygen concentration plus 2%), 14% (the second oxygen concentration plus 3%), etc., to allow for deviation of the first oxygen concentration without resulting in a false positive.

Referring back to FIG. 2, in some embodiments, the bypass valve 238 may be used in conjunction with the first oxygen sensor 266 to determine the presence or the absence of the leak. In such an embodiment, the bypass valve 238 is set to a full bypass position so that the partially humidified air stream 244 does not flow into the stack inlet 212A of the fuel cell stack 212. Instead, while the bypass valve 238 is in the full bypass position, the partially humidified air stream 244 flows from the outlet 236B of the dry-side 236 of the humidifier 230 directly into the inlet 234A of the wet-side 234 of the humidifier 230 (after passing through the bypass valve 238). While the bypass valve 238 is in the full bypass position, the partially humidified air stream 244 is flowing through both sides 234, 236 of the humidifier 230 and bypasses the fuel cell stack 212.

In such an embodiment, the first oxygen concentration is measured using the first oxygen sensor 266. Because the partially humidified air stream 244 is not flowing through the fuel cell stack 212, the first oxygen concentration should be similar to an oxygen concentration of ambient air.

Generally, an oxygen concentration of ambient air (i.e., the oxygen concentration of the partially humidified air stream 244) at the stack inlet 212A of the fuel cell stack 212 may be about 21%. The oxygen concentration of the partially humidified air stream 244 may be about 19% to about 23%, about 19% to about 22%, about 19% to about 21%, about 19% to about 20%, about 20% to about 23%, about 20% to about 22%, about 20% to about 21%, about 19 %, about 20%, about 22%, or about 23%. In illustrative embodiments, the oxygen concentration of the partially humidified air stream 244 is typically about 21%. Across the fuel cell stack 212, the oxygen concentration of the ambient air (i.e., the oxygen concentration of the humidified air stream 246) exiting the fuel cell stack 212 drops to about 10% to about 11% as the fuel cell stack 212 consumes oxygen.

In such embodiments in which the bypass valve 238 is set to a full bypass position, the threshold may be set to the oxygen concentration of ambient air or the oxygen concentration of ambient air plus a numerical value to allow for deviation of the first oxygen concentration without resulting in a false positive (e.g., plus about 5%, plus about 4%, plus about 3%, plus about 2%, or plus about 1%). The absence of a leak (i.e., no leak) is indicated and/or detected when the first oxygen concentration is substantially similar to the threshold (e.g., within about 5% of the threshold, within about 4%, within about 3%, within about 2%, or within about 1%). Conversely, when the first oxygen concentration is not substantially similar to or greater than the threshold (e.g., greater than about 1% of the threshold, greater than about 2% of the threshold, greater than about 3% of the threshold, greater than about 4% of the threshold, or greater than about 5% of the threshold), the presence of the leak is indicated and/or detected.

In some embodiments, the compressor 224 may be used in conjunction with the first oxygen sensor 266 to determine the presence or the absence of the leak. In such an embodiment, the bypass valve 238 is set to a closed position so that the partially humidified air stream 244 does not flow out of or through the bypass valve 238. While the bypass valve 238 is in the closed position, the partially humidified air stream 244 does not flow into the fuel cell stack 212 or into the wet-side 234 of the humidifier 230. Therefore, the compressor 224 is able to pressurize the dry-side 236 of the humidifier 230.

When there is no leak in the humidifier 230, the compressor 224 may surge because the pressure in the dry-side 236 of the humidifier 230 is rising and a flow of the partially humidified air stream 244 beyond the bypass valve 238 is blocked. For example, a pressure ratio across the compressor 224 while the compressor 224 is surging may be about 3:4. However, when there is a leak in the humidifier 230, then at least some of the partially humidified air stream 244 may escape or cross over to the wet-side 234 of the humidifier 230 so that the pressure in the dry-side 236 is not building up and rising. For example, the pressure ratio across the compressor 224 while the compressor 224 is not surging may be about 1:3. In such an embodiment, the surge of the compressor 224 is indicative of the absence of the leak and a lack of the surge of the compressor 224 is indicative of the presence of the leak.

Surge of the compressor 224 is defined and/or detected by a pressure reading or measurement from one or more pressure sensors (e.g., the pressure sensor 262, as shown in FIG. 2). Specifically, the pressure measurement of the compressor 224 when a leak is present should range from about 15 PSIA to about 45 PSIA (e.g., absolute pressure), including any specific or range of pressures comprised therein. When the pressure reading of the compressor 224 ranges from about 46 PSIA to about 60 PSIA, then a leak is not indicated to be present.

The fuel cell system 210 further includes a control module 270, as shown in FIG. 2. In some embodiments, the control module 270 controls, regulates, determines, and/or implements the one or more valves 238, 240 in the fuel cell system 210. In some embodiments, the control module 270 also communicates with one or more sensors 262, 264, 266, 268 in the fuel cell system 210. In some embodiments, the control module 270 controls, regulates, determines, and/or implements normal operation and/or startup of the fuel cell system 210.

In some embodiments, the control module 270 monitors the first oxygen concentration using the first oxygen sensor 266, the second oxygen concentration using the second oxygen sensor 268, the humidity using the humidity sensor 264, and/or the pressure using the pressure sensor 262. In some embodiments, the control module 270 monitors, detects, and/or measures other system parameters, such as fuel cell stack pressures, temperatures, flow rates, voltages, currents, etc. In some embodiments, the control module 270 monitors, detects, and/or measures ambient humidity, compressor speed, and/or other balance of plant (BOP) 16 parameters. In some embodiments, the control module 270 adjusts the positioning of the bypass valve 238 (e.g., closed position, full bypass position, or through the fuel cell stack 212 position) as necessary during operation of the fuel cell system 210. In some embodiments, the control module 270 also issues an alert when the presence of the leak in the humidifier 230 is detected. In some embodiments, the alert includes a visual indicator to a user, such as a color, a light, a symbol, etc. In some embodiments, the alert includes an audio indicator to the user. In some embodiments, the alert includes a combination of a visual indicator and an audio indicator.

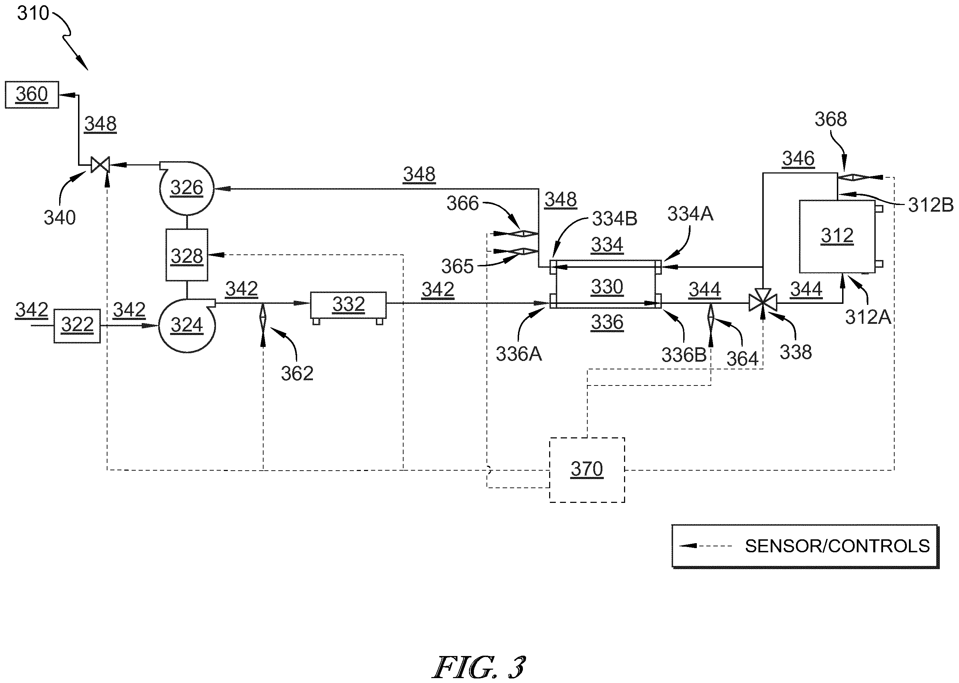

The present disclosure provides alternative systems and methods of detecting, identifying, measuring, and/or sensing a fuel cell humidifier leak. FIG. 3 illustrates another embodiment of a fuel cell system 310 that is substantially similar to the fuel cell system 210. However, the fuel cell system 310 includes an additional humidity sensor 365 that is not present in the fuel cell system 210. In the absence of disclosure to the contrary, the description, features, and components of the fuel cell system 210 are applicable and present for the fuel cell system 310.

The fuel cell system 310 includes an air filter 322, a compressor 324, a turbine 326, a motor 328, a humidifier 330, and/or a charge air cooler (CAC) 332, as shown in FIG. 3. The air filter 322 is arranged upstream of the compressor 324 to deliver a dry air stream 342 to the compressor 324. The motor 328 is coupled with the compressor 324 and the turbine 326 to selectively and/or individually drive the compressor 324 and the turbine 326. In some embodiments, the CAC 332 is arranged in series with a fuel cell stack 312 included in the fuel cell system 310. The humidifier 330 is arranged downstream of the CAC 332 to locate the CAC 332 between the compressor 324 and the humidifier 330.

In some embodiments, the fuel cell system 310 further includes one or more valves. For example, the fuel cell system 310 includes a bypass valve 338 and/or a two-way backpressure valve 340, as shown in FIG. 3. In some embodiments, the bypass valve 338 is a three-way stack isolation valve. In other embodiments, the fuel cell system 310 includes multiple valves, sensors, compressors, regulators, blowers, injectors, ejectors, and/or other devices in series or in parallel with the fuel cell stack 312. In some embodiments, an ultrasonic sensor downstream of a wet-side 334 of the humidifier 330 may be used to detect, measure, and/or identify leaks.

The humidifier 330 has a wet-side 334 and a dry-side 336, as shown in FIG. 3. The dry-side 336 includes an inlet 336A and an outlet 336B opposite the inlet 336A. The wet-side 334 includes an inlet 334A and an outlet 334B opposite the inlet 334A.

The dry air stream 342, also referred to as a cathode air stream 342, flows through the air filter 322, through the compressor 324, through the CAC 332, and into the inlet 336A of the dry-side 336 of the humidifier 330, as shown in FIG. 3. The dry air stream 342 is humidified as it passes through the dry-side 336 of the humidifier 330 to produce a partially humidified air stream 344. The partially humidified air stream 344 exits the humidifier 330 through the outlet 336B of the dry-side 336 and enters the fuel cell stack 312 after passing through the bypass valve 338, as shown in FIG. 3. More specifically, the partially humidified air stream 344 enters a stack inlet 312A of the fuel cell stack 312.

A humidified air stream 346 exits the fuel cell stack 312 through a stack outlet 312B and flows into the inlet 334A of the wet-side 334 of the humidifier 330, as shown in FIG. 3. The humidified air stream 346 flows out of the wet-side 334 of the humidifier 330 through the outlet 334B as an exhaust air stream 348. The exhaust air stream 348 exits the backpressure transfer valve 340 into exhaust plumbing 360. Such a configuration, design, and/or implementation, as shown in FIG. 3, results, in some embodiments, in the humidification of the entire volume of the partially humidified air stream 344 entering the fuel cell stack 312.

As shown in FIG. 3, the fuel cell system 310 includes one or more sensors. In some embodiments, the sensors of the fuel cell system 310 include a pressure sensor 362, at least one humidity sensor 364, 365, and/or at least one oxygen sensor 366, 368. In some embodiments, the fuel cell system 310 includes more than one sensor of a single type, such as a first humidity sensor 364 and a second humidity sensor 365. In some embodiments, the fuel cell system 310 includes more than one sensor of a single type, such as a first oxygen sensor 366 and a second oxygen sensor 368.

In one embodiment, the pressure sensor 362 is located downstream of the compressor 324 and upstream of the CAC 332, as shown in FIG. 3. For example, the fuel cell system 310 includes the pressure sensor 362 arranged upstream of the CAC 332 and upstream of the inlet 336A of the dry-side 336 of the humidifier 330 (see FIG. 3). In the illustrative embodiment, the fuel cell system 310 does not include a pressure sensor downstream of the wet-side 334 of the humidifier 330, as shown in FIG. 3. However, in another embodiment, a pressure sensor could be located downstream of the wet-side 334 of the humidifier 330.

In other embodiments, the pressure sensor 362 is located elsewhere within the fuel cell system 310. In some embodiments, the pressure sensor 362 is omitted. In other embodiments, the fuel cell system 310 includes additional pressure sensors. For example, the fuel cell system 310 may comprise a range of about one (1) to about ten (10) pressure sensors, including any number comprised therein.

In one embodiment, the first humidity sensor 364 is located downstream of the outlet 336B of the dry-side 336 of the humidifier 330 and upstream of the bypass valve 338, as shown in FIG. 3. For example, the fuel cell system 310 includes the first humidity sensor 364 arranged downstream of the outlet 336B of the dry-side 336 of the humidifier 330 and upstream of the stack inlet 312A of the fuel cell stack 312 (see FIG. 3). The first humidity sensor 364 measures a humidity of the partially humidified air stream 344 exiting the outlet 336B of the dry-side 336 of the humidifier 330.

In other embodiments, the first humidity sensor 364 is located elsewhere within the fuel cell system 310. In some embodiments, the first humidity sensor 364 is omitted altogether.

In one embodiment, the second humidity sensor 365 is located downstream of the outlet 334B of the wet-side 334 of the humidifier 330 and upstream of the first oxygen sensor 366, as shown in FIG. 3. For example, the fuel cell system 310 includes the second humidity sensor 365 arranged downstream of the outlet 334B of the wet-side 334 of the humidifier 330 and upstream of the first oxygen sensor 366 (see FIG. 3). The second humidity sensor 365 measures a humidity of the exhaust air stream 348 exiting the outlet 334B of the wet-side 334 of the humidifier 330. In some embodiments, the second humidity sensor 365 is used to determine the presence or the absence of the leak within the humidifier 330. For example, a humidity of the exhaust air stream 348 as measured, detected, calculated, and/or sensed by the second humidity sensor 365 should be at or within about 5% of an expected relative humidity of the exhaust air stream 348. The expected relative humidity of the exhaust air stream 348 is dependent on operating conditions of the fuel cell system 310.

When the humidity of the exhaust air stream 348 as measured by the second humidity sensor 365 is less than the expected relative humidity of the exhaust air stream 348 and deviates from the expected relative humidity of the exhaust air stream 348 by more than about 5%, the leak is present. In some embodiments, when the humidity of the exhaust air stream 348 is less than the expected relative humidity of the exhaust air stream 348 and deviates from the expected relative humidity of the exhaust air stream 348 by more than about 4%, the leak is present. In some embodiments, when the humidity of the exhaust air stream 348 is less than the expected relative humidity of the exhaust air stream 348 and deviates from the expected relative humidity of the exhaust air stream 348 by more than about 3%, the leak is present. In some embodiments, when the humidity of the exhaust air stream 348 is less than the expected relative humidity of the exhaust air stream 348 and deviates from the expected relative humidity of the exhaust air stream 348 by more than about 2%, the leak is present. When the humidity of the exhaust air stream 348 as measured by the second humidity sensor 365 is at or greater than the expected relative humidity of the exhaust air stream 348 or is within 5% of the expected relative humidity of the exhaust air stream 348, then the leak is absent.

For example, when the expected relative humidity of the exhaust air stream 348 is about 70%, then the humidity of the exhaust air stream 348 as measured by the second humidity sensor 365 should be at least about 65%. When the humidity of the exhaust air stream 348 as measured by the second humidity sensor 365 is less than about 65%, then the leak is present. When the humidity of the exhaust air stream 348 as measured by the second humidity sensor 365 is at 65% or greater than 65%, then the leak is absent.

In other embodiments, the second humidity sensor 365 is located elsewhere within the fuel cell system 310. In some embodiments, the second humidity sensor 365 is omitted altogether. In other embodiments, the fuel cell system 310 includes additional humidity sensors. For example, the fuel cell system 310 may comprise a range of about one (1) to about ten (10) humidity sensors, including any number comprised therein.

In an exemplary embodiment, the fuel cell system 310 includes at least two oxygen sensors, the first oxygen sensor 366 and the second oxygen sensor 368. In some embodiments, the first oxygen sensor 366 is located downstream of the outlet 334B of the wet-side 334 of the humidifier 330, as shown in FIG. 3. In other embodiments, the first oxygen sensor 366 is located elsewhere within the fuel cell system 310. In other embodiments, the first oxygen sensor 366 is omitted altogether.

In some embodiments, the second oxygen sensor 368 is located downstream of the stack outlet 312B of the fuel cell stack 312 and upstream of the inlet 334A of the wet-side 334 of the humidifier 330, as shown in FIG. 3. In other embodiments, the second oxygen sensor 368 is located elsewhere within the fuel cell system 310. In other embodiments, the second oxygen sensor 368 is omitted altogether.

In some embodiments, the fuel cell system 310 includes additional oxygen sensors beyond the first and second oxygen sensors 366, 368. For example, the fuel cell system 310 may comprise a range of about one (1) to about ten (10) oxygen sensors, including any number comprised therein.

In one embodiment, the first oxygen sensor 366 and the second oxygen sensor 368 are both arranged downstream of the stack outlet 312B of the fuel cell stack 312, as shown in FIG. 3. In one embodiment of the present fuel cell system 310, the first oxygen sensor 366 measures a first oxygen concentration of the exhaust air stream 348 exiting the outlet 334B of the wet-side 334 of the humidifier 330, as shown in FIG. 3. The second oxygen sensor 368 measures a second oxygen concentration of the humidified air stream 346 exiting the stack outlet 312B of the fuel cell stack 312.

Generally, an oxygen concentration of air (i.e., the first oxygen concentration of the exhaust air stream 348) exiting the outlet 334B of the wet-side 334 of the humidifier 330 may be about 11%. The first oxygen concentration of the exhaust air stream 348 may range from about 10% to about 15%, including any range of percentage or specific percentages comprised therein. For example, the first oxygen concentration of the exhaust air stream 348 may be about 10% to about 14%, about 10% to about 13%, about 10% to about 12%, about 10% to about 11%, about 11% to about 14%, about 12% to about 14%, about 13% to about 14%, about 10%, about 12%, about 13%, or about 14%. In some embodiments, the first oxygen concentration of the exhaust air stream 348 may be about 11%. Notably, the first oxygen concentration may vary depending on the fuel cell stack 312.

When the first oxygen concentration of the exhaust air stream 348 is greater than a threshold, a presence of a leak within the humidifier 330 is indicated and/or detected. In some embodiments, the threshold ranges from about 10% to about 15%, including any range of percentages or specific percentages comprised therein. In some embodiments, the threshold ranges from about 12% to about 15% or about 13% to about 15%, including any range of percentages or specific percentages comprised therein. In some embodiments, the threshold is about 13%, about 14%, or about 15%.

In some embodiments, the threshold is determined, defined, and/or established based on historical use data of the fuel cell stack 312. The historical use data is used to determine the expected oxygen concentration at the outlet 334B of the wet-side 334 of the humidifier 330, which may correspond to the threshold. For example, based on the historical use data of the fuel cell stack 312, it may be expected that the oxygen concentration at the outlet 334B of the wet-side 334 of the humidifier 330, as detected by the first oxygen sensor 366, should measure from about 10% to about 11%, including any range of percentages or specific percentages comprised therein. The threshold is then set to about 10% to about 11%.

The first oxygen concentration is measured by the first oxygen sensor 366 and compared to the threshold. When the humidifier 330 is not leaking, the first oxygen concentration may be substantially similar to the threshold, such as within a range of about 5% of the threshold. For example, in some embodiments, the threshold may be the expected oxygen concentration plus a numerical value. For example, when the expected oxygen concentration is 11%, the threshold may be 12% (the expected oxygen concentration percentage plus 1%), 13% (the expected oxygen concentration plus 2%), 14% (the expected oxygen concentration 3%), etc., to allow for deviation of the first oxygen concentration as measured by the first oxygen sensor 366 without resulting in a false positive. When the humidifier 330 is leaking, the first oxygen concentration may be substantially greater than the threshold, such as greater than the threshold by about 5% (e.g., 16% oxygen concentration when the threshold is 11%). In other embodiments, when the humidifier 330 is leaking, the first oxygen concentration may be substantially greater than the threshold, such as greater than the threshold by about 4%, by about 3%, by about 2%, or by about 1%.

In some embodiments, the first oxygen sensor 366 is used to determine, identify, and/or detect a presence or an absence of the leak such that the second oxygen sensor 368 is omitted and/or not used in the detection of the leak. In some embodiments, the second oxygen sensor 368 is used in conjunction with the first oxygen sensor 366 to determine, identify, and/or detect the presence or the absence of the leak. The second oxygen sensor 368 measures the second oxygen concentration of the humidified air stream 346 exiting the stack outlet 312B, as shown in FIG. 3.

In an embodiment including the second oxygen sensor 368, the second oxygen concentration and the first oxygen concentration are compared to one another. For example, when the second oxygen concentration and the first oxygen concentration are the same or substantially similar to one another (e.g., within about 5% of one another, within about 4% of one another, within about 3% of one another, within about 2% of one another, or within about 1% of one another), the absence of the leak (e.g., no leak) is detected. A relatively large difference (e.g., greater than about 5%, greater than about 4%, greater than about 3%, greater than about 2%, or greater than about 1 %) between the second oxygen concentration and the first oxygen concentration indicates the presence of the leak. In an ideal fuel cell system 310, the first oxygen concentration and the second oxygen concentration should be substantially similar (e.g., within about 5% of one another, within about 4% of one another, within about 3% of one another, within about 2% of one another, or within about 1% of one another). Otherwise, there may be a leak in the humidifier 330 that causes the first oxygen concentration to be higher or greater than the second oxygen concentration (e.g., greater than about 5%, greater than about 4%, greater than about 3%, greater than about 2%, or greater than about 1%).

For example, when the difference between the second oxygen concentration and the first oxygen concentration is greater than 5%, then the presence of the leak is detected. In some embodiments, when the difference between the second oxygen concentration and the first oxygen concentration is greater than 4%, then the presence of the leak is detected. In some embodiments, when the difference between the second oxygen concentration and the first oxygen concentration is greater than 3%, then the presence of the leak is detected. In some embodiments, when the difference between the second oxygen concentration and the first oxygen concentration is greater than 2%, then the presence of the leak is detected. In some embodiments, when the difference between the second oxygen concentration and the first oxygen concentration is greater than about 2% to about 5%, then the presence of the leak is detected, including any range of percentages or specific percentages comprised therein.

In some embodiments, the difference between the second oxygen concentration and the first oxygen concentration ranging from about 0% to about 2% is indicative of the absence of the leak within the humidifier 330, including any range of percentages or specific percentages comprised therein. In some embodiments, the difference between the second oxygen concentration and the first oxygen concentration ranging from about 0% to about 3% is indicative of the absence of the leak within the humidifier 330, including any range of percentages or specific percentages comprised therein. In some embodiments, the difference between the second oxygen concentration and the first oxygen concentration ranging from about 0% to about 4% is indicative of the absence of the leak within the humidifier 330, including any range of percentages or specific percentages comprised therein.

In some embodiments, the second oxygen concentration may be used to determine the threshold. For example, the threshold may be equal to the second oxygen concentration. In such an embodiment, when the first oxygen concentration is greater than the threshold (i.e., the second oxygen concentration), the presence of the leak is detected. In some embodiments, the threshold may be the second oxygen concentration plus a numerical value. For example, when the second oxygen concentration is 11%, the threshold may be 12% (the second oxygen concentration plus 1%), 13% (the second oxygen concentration plus 2%), 14% (the second oxygen concentration plus 3%), etc., to allow for deviation of the first oxygen concentration without resulting in a false positive.

Referring back to FIG. 3, in some embodiments, the bypass valve 338 may be used in conjunction with the first oxygen sensor 366 to determine the presence or the absence of the leak. The bypass valve 338 is set to a full bypass position so that the partially humidified air stream 344 does not flow into the stack inlet 312A of the fuel cell stack 312. Instead, while the bypass valve 338 is in the full bypass position, the partially humidified air stream 344 flows from the outlet 336B of the dry-side 336 of the humidifier 330 directly into the inlet 334A of the wet-side 334 of the humidifier 330 (after passing through the bypass valve 338). While the bypass valve 338 is in the full bypass position, the partially humidified air stream 344 is flowing through both sides 334, 336 of the humidifier 330 and bypasses the fuel cell stack 312.

In such an embodiment, the first oxygen concentration is measured using the first oxygen sensor 366. Because the partially humidified air stream 344 is not flowing through the fuel cell system 312, the first oxygen concentration should be similar to an oxygen concentration of ambient air.

Generally, an oxygen concentration of ambient air (i.e., the oxygen concentration of the partially humidified air stream 344) at the stack inlet 312A of the fuel cell stack 312 may be about 21%. The oxygen concentration of the partially humidified air stream 344 may be about 19% to about 23%, about 19% to about 22%, about 19% to about 21%, about 19% to about 20%, about 20% to about 23%, about 20% to about 22%, about 20% to about 21%, about 19 %, about 20%, about 22%, or about 23%. In illustrative embodiments, the oxygen concentration of the partially humidified air stream 344 is typically about 21%. Across the fuel cell stack 312, the oxygen concentration of the ambient air (i.e., the oxygen concentration of the humidified air stream 346) exiting the fuel cell stack 312 drops to about 10% to about 11% as the fuel cell stack 312 consumes oxygen.

In such embodiments in which the bypass valve 338 is set to the full bypass position, the threshold may be set to the oxygen concentration of ambient air or the oxygen concentration of ambient air plus a numerical value to allow for deviation of the first oxygen concentration without resulting in a false positive (e.g., plus about 5%, plus about 4%, plus about 3%, plus about 2%, or plus about 1%). The absence of a leak (i.e., no leak) is indicated and/or detected when the first oxygen concentration is substantially similar to the threshold (e.g., within about 5% of the threshold, within about 4%, within about 3%, within about 2%, or within about 1%). Conversely, when the first oxygen concentration is greater than the threshold (e.g., greater than about 1% of the threshold, greater than about 2% of the threshold, greater than about 3% of the threshold, greater than about 4% of the threshold, or greater than about 5% of the threshold), the presence of the leak is indicated and/or detected.

In some embodiments, the compressor 324 may be used in conjunction with the first oxygen sensor 366 to determine the presence or the absence of the leak. In such an embodiment, the bypass valve 338 is set to a closed position so that the partially humidified air stream 344 does not flow out of or through the bypass valve 338. While the bypass valve 338 is in the closed position, the partially humidified air stream 344 does not flow into the fuel cell stack 312 or into the wet-side 334 of the humidifier 330. Therefore, the compressor 324 is able to pressurize the dry-side 336 of the humidifier 330.

When there is no leak in the humidifier 330, the compressor 324 may surge because the pressure in the dry-side 336 is rising and a flow of the partially humidified air stream 344 beyond the bypass valve 338 is blocked. However, when there is a leak in the humidifier 330, then at least some of the partially humidified air stream 344 may escape or cross over to the wet-side 334 of the humidifier 330 so that the pressure in the dry-side 336 is not building up and rising. The surge of the compressor 324 is indicative of the absence of the leak in the humidifier 330 and a lack of the surge of the compressor 324 is indicative of the presence of the leak in the humidifier 330.

Surge of the compressor 324 is defined and/or detected by a pressure reading or measurement from one or more pressure sensors (e.g., the pressure sensor 362, as shown in FIG. 3). Specifically, the pressure measurement of the compressor 324 when a leak is present should range from about 15 PSIA to about 45 PSIA (e.g., absolute pressure), including any specific or range of pressure comprised therein. When the pressure reading of the compressor 324 ranges from about 46 PSIA to about 60 PSIA, then a leak is not indicated to be present.

The fuel cell system 310 further includes a control module 370, as shown in FIG. 3. In some embodiments, the control module 370 controls, regulates, determines, and/or implements the one or more valves 338, 340 in the fuel cell system 310. In some embodiments, the control module 370 also communicates with one or more sensors 362, 364, 365, 366, 368 in the fuel cell system 310. In some embodiments, the control module 370 controls, regulates, determines, and/or implements normal operation and/or startup of the fuel cell system 310.

In some embodiments, the control module 370 monitors the first oxygen concentration using the first oxygen sensor 366, the second oxygen concentration using the second oxygen sensor 368, the humidity using the first humidity sensor 364 and the second humidity sensor 365, and/or the pressure using the pressure sensor 362. In some embodiments, the control module 370 monitors, detects, and/or measures other system parameters, such as fuel cell stack pressures, temperatures, flow rates, voltages, currents, etc. In some embodiments, the control module 370 monitors, detects, and/or measures ambient humidity, compressor speed, and/or other balance of plant (BOP) 16 parameters. In some embodiments, the control module 370 adjusts the positioning of the bypass valve 338 (e.g., closed position, full bypass position, or through the fuel cell stack 312 position) as necessary during operation of the fuel cell system 310. In some embodiments, the control module 370 also issues an alert when the presence of the leak in the humidifier 330 is detected. In some embodiments, the alert includes a visual indicator to a user, such as a color, a light, a symbol, etc. In some embodiments, the alert includes an audio indicator to the user. In some embodiments, the alert includes a combination of a visual indicator and an audio indicator.

In some embodiments, the fuel cell system 210, 310 includes a pressure sensor downstream of the wet-side 234, 334 of the humidifier 230, 330. The pressure sensor may measure a pressure of the exhaust air stream 248, 348. The pressure may be monitored while the bypass valve 238, 338 and the two-way backpressure valve 240, 340 are in the closed position. While the bypass valve 238, 338 is in the closed position, the partially humidified air stream 244, 344 does not flow through the bypass valve 238, 338. While the two-way backpressure valve 240, 340 is in the closed position, the exhaust air stream 248, 348 does not flow through the two-way backpressure valve 240, 340. The compressor 224, 324 runs, and the pressure at the wet-side 234, 334 of the humidifier 230, 330 is monitored via the pressure sensor. If there is no leak, the compressor 224, 324 may surge. If the pressure at the wet-side 234, 334 of the humidifier 230, 330 rises, then the presence of the leak is detected.

The various leak checks disclosed may be performed during operation of the fuel cell stack 212, 312 or at startup and/or shutdown of the fuel cell stack 212, 312. The leak checks disclosed do not require the removal of the humidifier 230, 330 from the fuel cell system 210, 310 to perform an external evaluation of the humidifier 230, 330. Removal of the humidifier 230, 330 for evaluation may be difficult, requiring time, and it may expose the fuel cell system 210, 310 to dirt and debris.

A method of detecting a leak in a humidifier 230, 330 of a fuel cell system 210, 310 is also described herein. The method includes flowing a dry air stream 242, 342 through a compressor 224, 324 and into an inlet 236A, 336A of a dry-side 236, 336 of the humidifier 230, 330. The method includes flowing a partially humidified air stream 244, 344 out of an outlet 236B, 336B of the dry-side 236, 336 of the humidifier 230, 330 and into a stack inlet 212A, 312A of a fuel cell stack 212, 312. The method includes flowing a humidified air stream 246, 346 out of a stack outlet 212B, 312B of the fuel cell stack 212, 312 and into an inlet 234A, 334A of a wet-side 234, 334 of the humidifier 230, 330. The method includes flowing an exhaust air stream 248, 348 out of an outlet 234B, 334B of the wet-side 234, 334 of the humidifier 230, 330.

The method includes measuring a first oxygen concentration of the exhaust air stream 248, 348 downstream of the outlet 234B, 334B of the wet-side 234, 334 of the humidifier 230, 330 using a first oxygen sensor 266, 366. The method includes determining a presence or an absence of the leak in the humidifier 230, 330 based on the first oxygen concentration of the exhaust air stream 248, 348.

The method includes comparing the first oxygen concentration to a threshold. The method includes, in response to the first oxygen concentration being greater than the threshold, determining the presence of the leak in the humidifier 230, 330. In some embodiments, the threshold is about 15%. In some embodiments, the method includes calculating the threshold using historical use data of the fuel cell stack 212, 312.

The method includes measuring a second oxygen concentration of the humidified air stream 246, 346 downstream of the stack outlet 212B, 312B of the fuel cell stack 212, 312 using a second oxygen sensor 268, 368. The method includes setting the threshold to the second oxygen concentration. The method includes setting the threshold to the second oxygen concentration plus two percent. The method includes maintaining a position of the humidifier 230, 330 within the fuel cell system 210, 310 while determining the presence or the absence of the leak in the humidifier 230, 330. The method includes measuring a humidity of the exhaust air stream 248, 348 using a humidity sensor 365.

The following described aspects of the present invention are contemplated and nonlimiting:
A first aspect of the present invention relates to a fuel cell system. The fuel cell system comprises a fuel cell stack, a humidifier, and a first oxygen sensor. The fuel cell stack includes a stack inlet and a stack outlet opposite the stack inlet. The humidifier includes a wet-side fluidically coupled downstream of the stack outlet and a dry-side fluidically coupled upstream of the stack inlet. The humidifier is configured to humidify a dry air stream to form a partially humidified air stream that exits an outlet of the dry-side of the humidifier and enters the stack inlet of the fuel cell stack. The first oxygen sensor is arranged downstream of an outlet of the wet-side of the humidifier and is configured to measure a first oxygen concentration of an exhaust air stream exiting the outlet of the wet-side of the humidifier. The first oxygen concentration of the exhaust air stream being greater than a threshold is indicative of a leak within the humidifier.

A second aspect of the present invention relates to a method of detecting a leak in a humidifier of a fuel cell system. The method comprises flowing a dry air stream through a compressor and into an inlet of a dry-side of the humidifier. The method comprises flowing a partially humidified air stream out of an outlet of the dry-side of the humidifier and into a stack inlet of a fuel cell stack. The method comprises flowing a humidified air stream out of a stack outlet of the fuel cell stack and into an inlet of a wet-side of the humidifier. The method comprises flowing an exhaust air stream out of an outlet of the wet-side of the humidifier. The method comprises measuring a first oxygen concentration of the exhaust air stream downstream of the outlet of the wet-side of the humidifier using a first oxygen sensor. The method comprises determining a presence or an absence of the leak in the humidifier based on the first oxygen concentration of the exhaust air stream.

In the first aspect of the present invention, the threshold may be about 15%. In the first aspect of the present invention, the threshold may be about 13% to about 15%. In the first aspect of the present invention, the fuel cell system may further comprise a second oxygen sensor arranged downstream of the stack outlet of the fuel cell stack and upstream of an inlet of the wet-side of the humidifier. In the first aspect of the present invention, the second oxygen sensor may be configured to measure a second oxygen concentration of a humidified air stream exiting the stack outlet of the fuel cell stack.

In the first aspect of the present invention, the threshold may be the same as the second oxygen concentration. In the first aspect of the present invention, the threshold may be the second oxygen concentration plus two percent. In the first aspect of the present invention, the fuel cell system may further comprise a humidity sensor arranged downstream of the outlet of the wet-side of the humidifier and upstream of the first oxygen sensor. In the first aspect of the present invention, the humidity sensor may be configured to measure a humidity of the exhaust air stream exiting the outlet of the wet-side of the humidifier.

In the first aspect of the present invention, a pressure sensor may not be located downstream of the wet-side of the humidifier. In the first aspect of the present invention, the threshold may be determined based on historical use data of the fuel cell stack. In the first aspect of the present invention, the fuel cell system may further comprise a pressure sensor located upstream of an inlet of the dry-side of the humidifier.

In the second aspect of the present invention, the method may further comprise comparing the first oxygen concentration to a threshold to determine the presence or the absence of the leak in the humidifier. In the second aspect of the present invention, the method may further comprise, in response to the first oxygen concentration being greater than the threshold, determining the presence of the leak in the humidifier. In the second aspect of the present invention, the threshold may be about 15%.

In the second aspect of the present invention, the method may further comprise calculating the threshold using historical use data of the fuel cell stack. In the second aspect of the present invention, the method may further comprise measuring a second oxygen concentration of the humidified air stream downstream of the stack outlet of the fuel cell stack using a second oxygen sensor.

In the second aspect of the present invention, the method may further comprise setting the threshold to be the same as the second oxygen concentration. In the second aspect of the present invention, the method may further comprise setting the threshold to be the second oxygen concentration plus two percent.

In the second aspect of the present invention, the method may further comprise maintaining a position of the humidifier within the fuel cell system while determining the presence or the absence of the leak in the humidifier. In the second aspect of the present invention, the method may further comprise measuring a humidity of the exhaust air stream using a humidity sensor.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of' refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A fuel cell system comprising:
a fuel cell stack including a stack inlet and a stack outlet opposite the stack inlet,
a humidifier including a wet-side fluidically coupled downstream of the stack outlet and a dry-side fluidically coupled upstream of the stack inlet, wherein the humidifier is configured to humidify a dry air stream to form a partially humidified air stream that exits an outlet of the dry-side of the humidifier and enters the stack inlet of the fuel cell stack, and
a first oxygen sensor arranged downstream of an outlet of the wet-side of the humidifier and is configured to measure a first oxygen concentration of an exhaust air stream exiting the outlet of the wet-side of the humidifier,
wherein the first oxygen concentration of the exhaust air stream being greater than a threshold is indicative of a leak within the humidifier.

2. The fuel cell system of claim 1, wherein the threshold is about 13% to about 15%.

3. The fuel cell system of claim 1 or 2, further comprising a second oxygen sensor arranged downstream of the stack outlet of the fuel cell stack and upstream of an inlet of the wet-side of the humidifier, the second oxygen sensor configured to measure a second oxygen concentration of a humidified air stream exiting the stack outlet of the fuel cell stack.

4. The fuel cell system of claim 3, wherein the threshold is the same as the second oxygen concentration.

5. The fuel cell system of any preceding claim, further comprising a humidity sensor arranged downstream of the outlet of the wet-side of the humidifier and upstream of the first oxygen sensor, the humidity sensor is configured to measure a humidity of the exhaust air stream exiting the outlet of the wet-side of the humidifier.

6. The fuel cell system of any preceding claim, wherein the threshold is determined based on historical use data of the fuel cell stack.

7. The fuel cell system of any preceding claim, further comprising a pressure sensor located upstream of an inlet of the dry-side of the humidifier.

8. A method of detecting a leak in a humidifier of a fuel cell system comprising:
flowing a dry air stream through a compressor and into an inlet of a dry-side of the humidifier,
flowing a partially humidified air stream out of an outlet of the dry-side of the humidifier and into a stack inlet of a fuel cell stack,
flowing a humidified air stream out of a stack outlet of the fuel cell stack and into an inlet of a wet-side of the humidifier,
flowing an exhaust air stream out of an outlet of the wet-side of the humidifier,
measuring a first oxygen concentration of the exhaust air stream downstream of the outlet of the wet-side of the humidifier using a first oxygen sensor,
determining a presence or an absence of the leak in the humidifier based on the first oxygen concentration of the exhaust air stream.

9. The method of claim 8, further comprising comparing the first oxygen concentration to a threshold to determine the presence or the absence of the leak in the humidifier.

10. The method of claim 9, further comprising, in response to the first oxygen concentration being greater than the threshold, determining the presence of the leak in the humidifier.

11. The method of claim 10, wherein the threshold is about 15%.

12. The method of claim 10 or 11, further comprising calculating the threshold using historical use data of the fuel cell stack.

13. The method of claim 10, 11 or 12, further comprising measuring a second oxygen concentration of the humidified air stream downstream of the stack outlet of the fuel cell stack using a second oxygen sensor.

14. The method of claim 13, further comprising setting the threshold to be the second oxygen concentration plus two percent.

15. The method of any one of claims 8 to 14, further comprising measuring a humidity of the exhaust air stream using a humidity sensor.
